# EUROPEAN PATENT APPLICATION

(11) **EP 4 482 192 A1**
(43) Date of publication of application: **25.12.2024**
(21) Application number: 22925443.8
(22) Date of filing: 14.02.2022
(51) Int. Cl.: H04W 24/02, H04W 84/12

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/076215
(87) International publication number: WO 2023/151081

(57) **Abstract**

The present invention provides a communication method and a communication apparatus. The communication method may comprise: a sender device receives a request frame from a receiver device, the request frame comprising information, requested to be known, of a beacon frame for passive sensing measurement, and the sender device sends a response frame to the receiver device, wherein the response frame comprises the information of the beacon frame.

## Description

### TECHNICAL FIELD

The present disclosure relates to a field of wireless communications and, more particularly, to a method and an apparatus for communication for a wireless local area network (WLAN).

### BACKGROUND

A wireless local area network (WLAN) is characterized by flexibility, mobility and low cost. With development of communication technology and growth of user needs, research on applications for the use of WLAN is gradually increasing. For example, WLAN sensing is currently being investigated, and its main application scenarios are: location discovery in dense environments (home and corporate environments), proximity detection, and presence detection

### SUMMARY

Embodiments of the present disclosure provide the following technical solutions.

A method for communication is provided according to embodiments of the present disclosure. The method for communication may include: receiving, by an initiator, a request frame from a responder, in which the request frame includes information about a beacon frame used for passive sensing measurement; and sending, by the initiator, a response frame to the responder, in which the response frame includes the information of the beacon frame.

A method for communication is provided according to embodiments of the present disclosure. The method for communication may include: sending, by a responder, a request frame to an initiator, in which the request frame includes information about a beacon frame used for passive sensing measurement; and receiving, by the responder, a response frame from the initiator, in which the response frame includes the information of the beacon frame.

An apparatus for communication is provided according to embodiments of the present disclosure. The apparatus for communication may include: a transceiver module, configured to: receive a request frame from a responder, in which the request frame includes information about a beacon frame used for passive sensing measurement; and send a response frame to the responder, in which the response frame includes the information of the beacon frame.

An apparatus for communication is provided according to embodiments of the present disclosure. The apparatus for communication may include: a transceiver module, configured to: send a request frame to an initiator, in which the request frame includes information about a beacon frame used for passive sensing measurement; and receive a response frame from the initiator, in which the response frame includes the information of the beacon frame.

An electronic device is provided according to embodiments of the present disclosure. The electronic device includes a memory, a processor, and a computer program stored on the memory and executable on the processor, in which when the computer program is executed by the processor, the method described above is implemented.

A computer-readable storage medium is provided according to embodiments of the present disclosure. The computer-readable storage medium stores a computer program that, when executed by a processor, implements the method described above.

The technical solution provided according to the embodiments of the present disclosure refines the mechanism of a passive sensing measurement and can meet the needs of the WLAN sensing.

### BRIEF DESCRIPTION OF THE DRAWINGS

The foregoing, and other features of embodiments of the present disclosure will be made more apparent by describing in detail exemplary embodiments of the present disclosure with reference to the accompanying drawings.
FIG. 1 illustrates an exemplary way of WLAN sensing.
FIG. 2 is a flowchart illustrating a method for communication according to an embodiment of the present disclosure.
FIG. 3 is a flowchart illustrating an interaction between an initiator and a responder according to an embodiment of the present disclosure.
FIG. 4 is a flowchart illustrating another method for communication according to an embodiment of the present disclosure.
FIG. 5 is a block diagram illustrating an apparatus for communication according to an embodiment of the present disclosure.

### DETAILED DESCRIPTION

The following description with reference to the accompanying drawings is provided to assist in fully understanding the various embodiments of the present disclosure as defined by the appended claims and their equivalents. The various embodiments of the present disclosure include various specific details, but these specific details are considered exemplary only. In addition, descriptions of well-known techniques, functions, and constructions may be omitted for the sake of clarity and brevity.

Terms and phrases used in this disclosure are not limited to their written meaning, but are used only by the inventors to enable a clear and consistent understanding of the disclosure. Accordingly, the description of various embodiments of the present disclosure is provided for illustrative purposes only, and not for limiting purposes, to those skilled in the art.

It is appreciated that the singular forms "a", "an", and "this" as used herein may also include the plural forms unless the context clearly indicates otherwise. It will be further understood that the term "including" as used in the present disclosure refers to the presence of the described features, integers, steps, operations, elements, and/or components, but does not preclude the presence or addition of one or more other features, integers, steps, operations, elements, components, and/or their groups.

It will be appreciated that while the terms "first", "second", etc. may be used herein to describe various elements, these elements should not be limited by these terms. These terms are only used to distinguish one element from another. Thus, without departing from the teachings of the example embodiments, the first element discussed below may be referred to as a second element.

It is appreciated that when an element is referred to as "connected" or "coupled" to another element, it may be directly connected or coupled to the other element, or there may be intermediate elements. In addition, "connected" or "coupled" as used herein may include wirelessly connection or wirelessly couple. The terms "and/or" or the expression "at least one of ......" as used herein include any and all combinations of one or more of the relevant listed items.

Unless otherwise defined, all terms used herein, including technical and scientific terms, have the same meaning as generally understood by those of ordinary skill in the art to which this disclosure belongs.

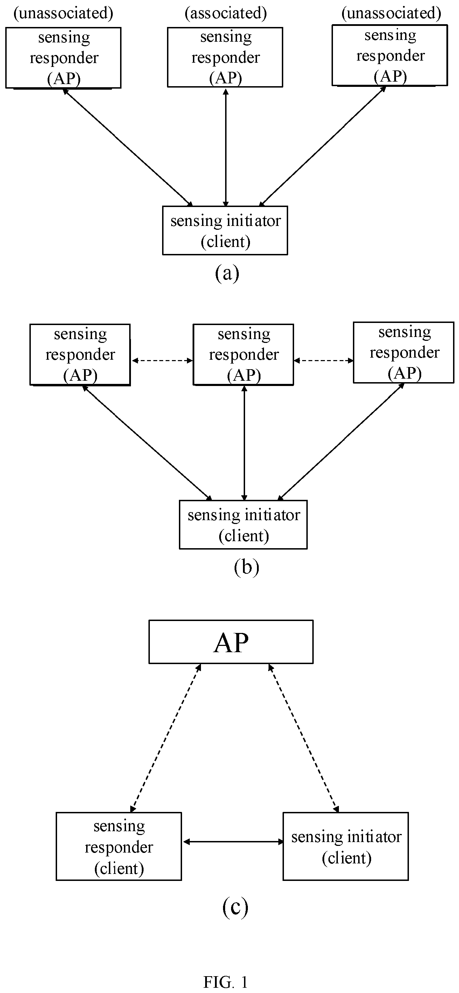

FIG. 1 illustrates an exemplary way of WLAN sensing.

The process of the WLAN sensing may be: an initiator initiates the WLAN sensing (for example, initiates a WLAN sensing session), and a plurality of responders may be present to respond to the WLAN sensing, and the specific way may be as shown in the (a), (b), and (c) in FIG. 1.

Referring to the (a) in Figure 1, in a case that a WLAN sensing initiator (for example, a client) initiates the WLAN sensing, a plurality of associated or unassociated WLAN sensing responders (for example, three access points (APs)) may respond. "Associated" here may refer to that the initiator and the responder establish an associated connection for communication, and "unassociated" may refer to that the initiator and the responder do not establish an associated connection for communication.

For example, the client may include, but is not limited to: a cellular phone, a smart phone, a wearable device, a computer, a personal digital assistant (PDA), a personal communication system (PCS) device, a personal information manager (PIM), a personal navigation device (PND), a global positioning system (GPS), a multimedia device, an Internet of Things (IoT) device, and the like.

The AP may be a wireless switch for a wireless network or an access device for a wireless network. The AP may include software applications and/or circuitry to enable other types of nodes in the wireless network to communicate with the outside of the wireless network as well as the inside of the wireless network via the AP. For example, the AP may be a terminal device or network device equipped with a Wi-Fi (Wireless Fidelity) chip.

The (b) in FIG. 1 is similar to the (a) in FIG. 1, but in the (b) in FIG. 1, communication may be performed between each responder (AP).

Referring to the (c) in FIG. 1, both the WLAN sensing initiator and the WLAN sensing responder may be the clients, and both may communicate by connecting to the same AP.

Although illustrated in the (a), (b), and (c) in FIG. 1 that the client serves as the initiator and the AP serves as the responder, the present disclosure is not limited thereto. For example, the AP may serve as the initiator and the client may serve as the responder. Furthermore, the numbers of initiators and responders are not limited to that shown in the (a), (b), and (c) of FIG. 1.

In addition, although only the AP is shown to participate in the WLAN sensing in FIG. 1, the present disclosure is not limited thereto. For example, a PCP (personal basic service set (PBSS) control point) may also participate in the WLAN sensing.

For example, in a 60 GHz spectrum, the AP/PCP may send a sensing signaling, for example, a directional beacon frame, in which a format (or content) contained in the directional beacon frame may be the same as a normal (or regular) beacon frame, and there may be passive sensing in the WLAN sensing, i.e., the receiver only receives the sensing signaling sent by the AP/PCP and does not perform the sending of the sensing signaling. That is, the AP/PCP may serve as the initiator (also referred to as the "sender" in the following), and the receiver may serve as the responder. In the present disclosure, the receiver may be referred to as a passive station (STA), which may be similar to the client described referring to FIG. 1.

For example, the directional beacon frame sent by the AP/PCP may serve as the sensing signaling, and the receiver for the passive sensing may utilize the sent directional beacon frame to perform the WLAN sensing measurement and provide feedback to the AP/PCP on the sensing measurement results. However, in the current research, the mechanism regarding the passive sensing measurement is not perfect. For example, the receiver needs to know a period, direction, and other information of the sensing signaling for the passive sensing, but the current research lacks the corresponding support mechanism and needs to be improved.

In view of this, there are provided a method and an apparatus for communication according to embodiments of the present disclosure.

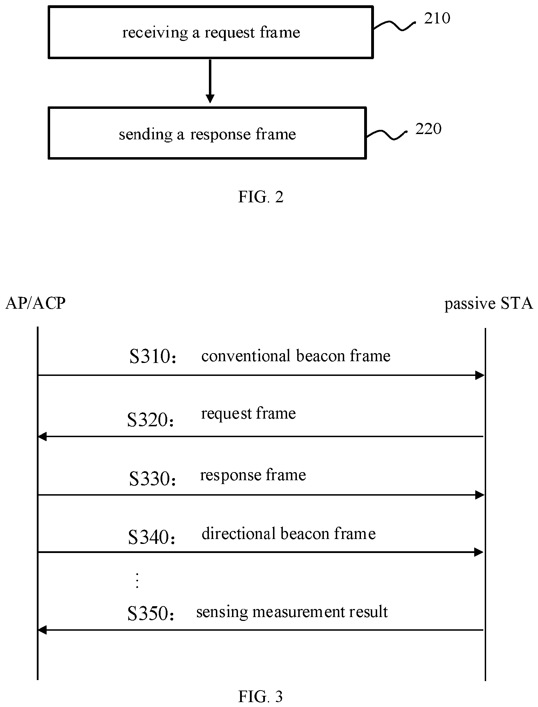

FIG. 2 is a flowchart illustrating a method for communication according to an embodiment of the present disclosure. The method for communication shown in FIG. 2 may be applied to an initiator for WLAN sensing, for example, the AP or PCP as described above.

Referring to FIG. 2, at step 210, a request frame is received. Specifically, the initiator receives the request frame from a responder. For example, the request frame includes information about a beacon frame used for passive sensing measurement that is requested to be obtained. For example, the responder may be a passive station, examples of which may include, but are not limited to: a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, and the like. In addition, although the beacon frame for the passive sensing measurement is described herein, the present disclosure is not limited to this, and other sensing signalings that can be used for the passive sensing measurement are also allowable.

According to an embodiment of the present disclosure, the request frame may include the information about the beacon frame that is requested to be obtained by the responder. That is, the initiator may know the information about the beacon frame that is requested to be obtained by the responder through the request frame sent by the responder. For example, the request frame may include a sending period and a sending direction of the beacon frame. In this case, the sending period and the sending direction of the beacon frame included in the request frame may be fields to be determined, and are only used to make the initiator know the information requested by the responder. In addition, as a non-limited embodiment, the sending direction information includes training sequence field (TRN) information, which is configured to indicate the sending direction of the beacon frame.

According to another embodiment of the present disclosure, the request frame may also include: timestamp information configured for time synchronization. For example, in a case that the passive station serving as the responder has not established an initial association with the AP/PCP, the request frame may also include the timestamp information configured for time synchronization between the passive STA and the AP/PCP.

At step 220, a response frame is sent. Specifically, the initiator sends the response frame to the responder. For example, the response frame may include the information of the beacon frame for passive sensing measurement. According to an embodiment of the present disclosure, the information of the beacon frame may include the sending period and the sending direction of the beacon frame. In this case, the sending period and the sending direction of the beacon frame included in the response frame may be a specific sending period and a specific sending direction. For example, the sending period may indicate a period in which the beacon frame is to be sent, and the sending direction may indicate information of an azimuth and elevation direction (or a radiation pattern), and/or power of an antenna when the beacon frame is sent by the initiator.

According to an embodiment of the present disclosure, the information of the beacon frame may further include starting sending direction information of the beacon frame. For example, the starting sending direction information of the beacon frame may indicate a starting direction in a sending sequence of the beacon frame. Specifically, the starting sending direction information may define a direction in which the beacon frame is sent for the first time, so that starting from this direction, the beacon frame is sequentially sent in respective directions according to the sending period, to be used for the passive sensing.

According to an embodiment of the present disclosure, the response frame may further include timestamp information configured for time synchronization. The timestamp information may be configured for time synchronization between the AP/PCP and the passive STA, ensuring accurate sending and receiving of the beacon frame.

At step 210 and step 220, the beacon frame for the passive sensing measurement may be a lightweight beacon frame that is only configured for the passive sensing measurement or a conventional beacon frame. For example, the lightweight beacon frame is only configured for the passive sensing measurement, i.e., the lightweight beacon frame only contains necessary information required for the passive sensing measurement, thus the lightweight beacon frame contains less information, which is conducive to reducing the power consumption of sending the lightweight beacon frame and improving the efficiency of the sensing measurement. In addition, in a case that the beacon frame is the lightweight beacon frame, the response frame may further includes: a sending time interval for the beacon frame. By carrying the sending time interval for the lightweight beacon frame in the response frame, the responder may be enabled to receive the lightweight beacon frame at a more accurate time for passive sensing measurement. In an embodiment of the present disclosure, the conventional beacon frame may also serve as a sensing signaling for the passive sensing measurement, and in this case, the response frame may include the sending period and the sending direction of the conventional beacon frame as described at step 220, or may also include the starting sending direction information of the conventional beacon frame, and the like.

Although FIG. 2 illustrates the method for communication performed by the initiator according to an embodiment of the present disclosure, embodiments of the present disclosure are not limited thereto.

According to another embodiment of the present disclosure, a method for communication performed by an initiator may include: the initiator broadcasts the conventional beacon frame to the responder. The conventional beacon frame may include, for example, but is not limited to, identification information configured to identify that the beacon frame supports to be used for passive sensing measurement signaling.

According to another embodiment of the present disclosure, a method for communication performed by an initiator may include: sending the response frame to the responder. The response frame may include the information of the beacon frame for passive sensing measurement. For example, the information of the beacon frame may include the sending period and the sending direction of the beacon frame. For example, the information of the beacon frame may also include the starting sending direction information of the beacon frame. That is, the response frame may include the sending period and the sending direction of the beacon frame, or optionally, may further include the starting sending direction information of the beacon frame. In addition, optionally, the response frame may include the timestamp information configured for time synchronization. In addition, in a case that the beacon frame for the passive sensing measurement is the lightweight beacon frame, the request frame may also include: the sending time interval for the lightweight beacon frame.

According to another embodiment of the present disclosure, a method for communication performed by an initiator may include: sending to the responder the lightweight beacon frame that is only configured for the passive sensing measurement. The lightweight beacon frame includes only necessary information required for the passive sensing measurement. In addition, the sending direction and the sending period, or (optionally) the sending time interval of the lightweight beacon frame may be notified in advance by the initiator to the responder.

According to another embodiment of the present disclosure, a method for communication performed by an initiator may include: sending to the responder the conventional beacon frame for the passive sensing measurement. The conventional beacon frame may include not only information required for the passive sensing measurement, but also various other information, such as, network information or channel information for managing data transmission. In addition, the sending direction and the sending period of the conventional beacon frame may be notified in advance by the initiator to the responder. According to the method for communication of embodiments of the present disclosure, the sending period, the sending direction and other information of the beacon frame for passive sensing measurement are defined at the initiator and the responder by the request frame and the response frame, refining the mechanism for passive sensing measurement.

FIG. 3 is a flowchart illustrating an interaction between an initiator and a responder according to an embodiment of the present disclosure. The initiator may be an AP/PCP and the responder may be a passive STA.

Referring to FIG. 3, at step S310, the AP/PCP may send a conventional beacon frame to the passive STA. Specifically, the initiator may broadcast the conventional beacon frame before receiving a request frame. The conventional beacon frame may include: identification information configured to identify that the beacon frame supports to be used for the passive sensing measurement signaling. For example, the AP/PCP may carry an identification bit in the conventional beacon frame, for example, as a non-limiting example, in a directional multi-Giga (DMG) capability information element of the conventional beacon frame, to identify that beacon frame supports to be used for the passive sensing measurement signaling.

At step S320, in a case that the passive STA receives the broadcast conventional beacon frame, the request frame may be sent to the AP/PCP. The request frame may include a sending period and a corresponding sending direction of the directional beacon frame for the passive sensing, in which the sending direction may include TRN information configured to indicate the sending direction of the directional beacon frame. In addition, for the STA that has not established an initial association with the AP/PCP, the timestamp information may also be included, in which the timestamp information is configured for time synchronization. The directional beacon frames described in this embodiment may refer to the sensing signaling for the passive sensing measurement, for example, the lightweight beacon frame or the conventional beacon frame with the period and the direction as described above. However, the present disclosure is not limited thereto. The request frame may also include the starting sending direction information of the directional beacon frame, and the like.

At step S330, the AP/PCP may respond a response frame to the passive STA. The information included in the response frame may be: the direction of the directional beacon frame sent by the AP/PCP and the corresponding periodicity of the directional beacon frame. In addition, the response frame may include a timestamp field that is configured for time synchronization between the AP and the STA. In addition, the response frame may also include starting information for sending the directional beacon frame (such as the starting sending direction information described in step 220), which is configured to indicate a sequence for the directional sending of the directional beacon frame.

At step S340, the AP/PCP may send the directional beacon frame based on the sending period, the sending direction, or the starting sending direction information, etc., defined through the request frame and the response frame, and the passive STA may periodically receive the sent directional beacon frame. The passive STA may utilize the received directional beacon frame to perform the WLNA sensing measurement, and in step S350, the passive STA may provide the AP/PCP with feedback of the sensing measurement result, such as, but not limited to, channel state information (CSI). As a non-limiting example, the passive STA may feed back the sensing measurement result after receiving a plurality of directional beacon frames (delayed feedback), or may feed back the sensing measurement result each time in case of receiving the directional beacon frames (timely feedback).

Furthermore, although FIG. 3 describes as an embodiment for the directional beacon frame serving as the sense signaling, the present disclosure is not limited thereto. At step S310, a conventional beacon frame may be defined to support the passive sensing measurement, and a sending period, a sending direction, or a starting sending direction information, etc., of the conventional beacon frame may be defined at step S320 and step S330, and the passive sensing measurement may be performed by utilizing the conventional beacon frame at step S340 and step S350.

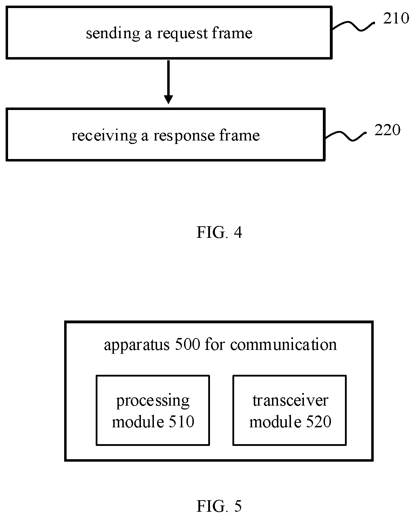

FIG. 4 is a flowchart illustrating another method for communication according to an embodiment of the present disclosure. The method for communication shown in FIG. 4 is applicable to a responder, for example, the passive STA shown in FIG. 3.

Referring to FIG. 4, at step 410, a request frame may be sent to an initiator by the responder, in which the request frame may include information about a beacon frame used for passive sensing measurement that is requested to be obtained. For example, the information of the beacon frame may include a sending period and a sending direction of the beacon frame. In addition, the request frame may include: timestamp information configured for time synchronization. The step 410 may be similar to the operation of the step S320 described above, and the repetitive description is omitted herein for brevity.

At step 420, the responder may receive the response frame from the initiator, in which the response frame includes the information of the beacon frame. For example, the response frame may further include: the timestamp information configured for time synchronization. For example, the information of the beacon frame may include: the sending period and the sending direction of the beacon frame. For example, the information of the beacon frame may further include: the starting sending direction information of the beacon frame.

According to an embodiment of the present disclosure, the beacon frame may be the lightweight beacon frame that is only configured for the passive sensing measurement or the conventional beacon frame.

According to an embodiment of the present disclosure, in a case that the beacon frame is the lightweight beacon frame, the response frame further includes: a sending time interval for the beacon frame.

The step 420 may be similar to the operation of the step S330 described above, and the repetitive description is omitted herein for brevity.

It will be appreciated that the method for communication shown in FIG. 4 is only exemplary and the present disclosure is not limited thereto. For example, the method for communication shown in FIG. 4 may also include the operations performed by the passive STAin FIG. 3.

For example, the method for communication shown in FIG. 4 may further includes: receiving, by the responder, the conventional beacon frame from the initiator, before sending the request frame, in which the conventional beacon frame includes: identification information configured to identify that the beacon frame supports to be used for passive sensing measurement signaling. The conventional beacon frame and the identification information included in the conventional beacon frame may be similar to the embodiment described with reference to step S310, and the repetitive description is omitted herein for brevity.

Although FIG. 4 illustrates the method for communication performed by the responder according to the embodiments of the present disclosure, embodiments of the present disclosure are not limited thereto.

According to another embodiment of the present disclosure, a method for communication performed by the responder may include: sending, by a responder, a request frame to an initiator, in which the request frame includes information about a beacon frame used for passive sensing measurement that is requested to be obtained. For example, the information of the beacon frame may include the sending period and the sending direction of the beacon frame, and the like. In addition, optionally, the information of the beacon frame may further include the starting sending direction information of the beacon frame. That is, the beacon frame may include the sending period and the sending direction of the beacon frame that is requested to be obtained. or optionally, the beacon frame may further include the starting sending direction information of the beacon frame that is requested to be obtained. In addition, optionally, the request frame may also include: the timestamp information configured for time synchronization. For example, in a case that the responder (for example, the passive STA) has not established the initial association with the initiator (for example, the AP/PCP), the request frame may also include the timestamp information configured for time synchronization between the passive STA and the AP/PCP.

FIG. 5 is a block diagram illustrating an apparatus for communication according to an embodiment of the present disclosure. The apparatus 500 for communication shown in FIG. 5 may include a processing module 510 and a transceiver module 520. In an embodiment of the present disclosure, the apparatus 500 for communication shown in FIG. 5 is applicable to an initiator, for example, an AP/PCP; in another embodiment of the present disclosure, the apparatus 500 for communication shown in FIG. 5 is applicable to a responder, for example, a passive STA.

In a case that the apparatus 500 for communication shown in FIG. 5 is applicable to the initiator, the transceiver module 520 may be configured to: receive a request frame from a responder, in which the request frame includes information about a beacon frame used for passive sensing measurement that is requested to be obtained; and send a response frame to the responder, in which the response frame includes the information of the beacon frame. The processing module 510 may be configured to: control an operation of the transceiver module 520. However, the present disclosure is not limited thereto. The processing module 510 may also be configured to parse and obtain the information carried in the request frame and determine the information of the response frame. That is, the apparatus 500 for communication shown in FIG. 5 may perform the method for communication described referring to FIG. 2, and the operations performed by the AP/PCP in FIG. 3, and the repetitive description is omitted herein for brevity.

In a case that the apparatus 500 for communication shown in FIG. 5 is applicable to the responder, the transceiver module 520 may be configured to: send a request frame to an initiator, in which the request frame includes information about a beacon frame used for passive sensing measurement that is requested to be obtained; and receive a response frame from the initiator, in which the response frame includes the information of the beacon frame. The processing module 510 may be configured to: control an operation of the transceiver module 520. In addition, the processing module 510 may also parse and obtain the information carried in the response frame, and control the transceiver module 520 to periodically receive the beacon frame for the passive sensing measurement based on the information, and may also control the execution of the passive sensing measurement and the like. That is, the apparatus 500 for communication shown in FIG. 5 may perform the method for communication described referring to FIG. 4, and the operations performed by the passive STA in FIG. 3, and the repetitive description is omitted herein to avoid redundancy.

It will be appreciated that the apparatus 500 for communication shown in FIG. 5 is only exemplary, and embodiments of the present disclosure are not limited thereto. For example, the apparatus 500 for communication may also include other modules, for example, a memory module and the like. In addition, the individual module in the apparatus 500 for communication may be combined into a more complex module, or may be divided into more separate modules.

The method and the apparatus for communication according to embodiments of the present disclosure define the direction and the period for sending the directional beacon frame, so that the directional beacon frame can be used for the passive sensing, which improves the mechanism of the passive sensing measurement, and can meet the needs of WLAN sensing.

Based on the same principles as the methods provided in the embodiments of the present disclosure, an embodiment of the present disclosure further provides an electronic device, which includes a processor and a memory. The memory stores a machine-readable instructions (which may also be referred to as a computer program), and the processor is configured to execute the machine-readable instructions to implement the methods described referring to FIG. 2 to FIG. 4.

An embodiment of the present disclosure also provides a computer-readable storage medium having stored thereon a computer program that, when executed by a processor, implements the methods according to FIG. 2 to FIG. 4.

According to an embodiment of the present disclosure, the processor may be a logic box, module, and circuit used to implement or perform the various exemplary logic boxes, modules, and circuits described in conjunction with the present disclosure. For example, a central processing unit (CPU), a general-purpose processor, a digital signal processor (DSP), an application specific integrated circuit (ASIC), a field programmable gate array (FPGA), or other programmable logic device, transistorized logic device, hardware component, or any other combination. The processor may also be a combination that implements a computing function, such as a combination including one or more microprocessors, a combination of a DSP and a microprocessor, and the like.

According to an embodiment of the present disclosure, the memory may be, for example, a read only memory (ROM), a random access memory (RAM), an electrically erasable programmable read only memory (EEPROM), a compact disc read only memory (CD-ROM), a compact disc read only memory (CD-ROM), a compact disc read only memory (CD-ROM), or other optical disc storage, optical disc storage (including compressed disc, laser disc, compact disc, digital omnibus disc, blu-ray disc, etc.), a disk storage medium or other magnetic storage device, or any other medium capable of being used for carrying or storing program code in the form of instructions or data structures and capable of being accessed by a computer, which is not limited herein.

It is appreciated that although the steps in the flowchart of the accompanying drawings are shown sequentially as indicated by the arrows, the steps are not necessarily performed sequentially in the order indicated by the arrows. Unless expressly stated herein, the execution of these steps is not strictly limited in order, and they may be executed in other orders. In addition, at least some of the steps in the flowchart of the accompanying drawings may include a plurality of sub-steps or a plurality of phases, which are not necessarily executed to completion at the same moment but may be executed at different moments, and which may be executed in an order that is not necessarily sequential, but may be executed in turn or alternately with at least a portion of other steps or sub-steps or phases of other steps.

Although the present disclosure has been shown and described with reference to certain embodiments of the present disclosure, those skilled in the art will appreciate that various changes in form and detail may be made without departing from the scope of the present disclosure. In addition, features, steps, and/or elements described in conjunction with particular embodiments may be used alone, or may be used in combination with features, steps, and/or elements described in conjunction with other embodiments. Thus, the scope of the present disclosure should not be limited to being restricted to the embodiments, but should be limited by the appended claims and their equivalents.

## Claims

1. A method for communication, comprising:
receiving, by an initiator, a request frame from a responder, wherein the request frame comprises information about a beacon frame used for passive sensing measurement; and
sending, by the initiator, a response frame to the responder, wherein the response frame comprises the information about the beacon frame.

2. The method according to claim 1, wherein the information of the beacon frame comprises: a sending period and a sending direction of the beacon frame.

3. The method according to claim 2, wherein the information of the beacon frame further comprises: starting sending direction information of the beacon frame.

4. The method according to claim 2 or 3, wherein the response frame further comprises: timestamp information configured for time synchronization.

5. The method according to claim 2 or 3, wherein the request frame further comprises: timestamp information configured for time synchronization.

6. The method according to claim 2 or 3, wherein the beacon frame is a lightweight beacon frame that is only configured for the passive sensing measurement or a conventional beacon frame.

7. The method according to claim 6, wherein, in a case that the beacon frame is the lightweight beacon frame, the response frame further comprises: a sending time interval for the beacon frame.

8. The method according to claim 1, further comprising:
broadcasting, by the initiator, a conventional beacon frame, before receiving the request frame,
wherein the conventional beacon frame comprises: identification information configured to identify that the beacon frame supports to be used for passive sensing measurement signaling.

9. A method for communication, comprising:
sending, by a responder, a request frame to an initiator, wherein the request frame comprises information about a beacon frame used for passive sensing measurement; and
receiving, by the responder, a response frame from the initiator, wherein the response frame comprises the information about the beacon frame.

10. The method according to claim 9, wherein the information of the beacon frame comprises: a sending period and a sending direction of the beacon frame.

11. The method according to claim 10, wherein the information of the beacon frame further comprises: starting sending direction information of the beacon frame.

12. The method according to claim 10 or 11, wherein the response frame further comprises: timestamp information configured for time synchronization.

13. The method according to claim 10 or 11, wherein the request frame further comprises: timestamp information configured for time synchronization.

14. The method according to claim 10 or 11, wherein the beacon frame is a lightweight beacon frame that is only configured for the passive sensing measurement or a conventional beacon frame.

15. The method according to claim 14, wherein, in a case that the beacon frame is the lightweight beacon frame, the response frame further comprises: a sending time interval for the beacon frame.

16. The method according to claim 9, further comprising:
receiving, by the responder, a conventional beacon frame from the initiator, before sending the request frame,
wherein the conventional beacon frame comprises: identification information configured to identify that the beacon frame supports to be used for passive sensing measurement signaling.

17. An apparatus for communication, comprising:
a transceiver module, configured to: receive a request frame from a responder, wherein the request frame comprises information about a beacon frame used for passive sensing measurement; and send a response frame to the responder, wherein the response frame comprises the information about the beacon frame.

18. An apparatus for communication, comprising:
a transceiver module, configured to: send a request frame to an initiator, wherein the request frame comprises information about a beacon frame used for passive sensing measurement; and receive a response frame from the initiator, wherein the response frame comprises the information about the beacon frame.

19. An electronic device, comprising: a memory, a processor, and a computer program stored on the memory and executable on the processor, wherein when the computer program is executed by the processor, the method according to any one of claims 1 to 8 or claims 9 to 16 is implemented.

20. A computer-readable storage medium having stored thereon a computer program that, when executed by a processor, implements the method according to any one of claims 1 to 8 or claims 9 to 16.
